# DEMANDE DE BREVET EUROPEEN

(11) **EP 0 947 365 A1**
(43) Date de publication de la demande: **06.10.1999**
(21) Numéro de dépôt: 99400457.0
(22) Date de dépôt: 25.02.1999
(51) Int. Cl.: B60J 7/14

(54) **Véhicle utilitaire transformable en cabriolet**

(30) Priorité: 31.03.1998 FR 9803951
(71) Demandeur: AUTOMOBILES PEUGEOT, 75116 Paris (FR); AUTOMOBILES CITROEN, 92200 Neuilly-sur-Seine (FR)
(72) Inventeur: Gardiner, Geffroy Thomas, 78000 Versailles (FR)
(74) Mandataire: Gendraud, Pierre

(57) **Abrégé**

L'invention concerne le domaine des véhicules automobiles et plus particulièrement les systèmes de couverture rigides et pliables. Le système de couverture pliable de véhicule automobile objet de l'invention est composé de deux parties coulissantes l'une sur l'autre. L'une des parties est constituée d'un toit rigide (2) et l'autre partie est constitué de supports latéraux (3), caractérisé en ce que lesdits supports (3) sont montés mobiles en rotation sur les parois latérales (11) du véhicule selon un axe XX' longitudinal au véhicule et en ce que le système de pliage est composé de rails (20, 32) de guidage montés sur l'une des parties de la couverture et coopérant avec des chariots ou galets (30, 21) fixés sur l'autre partie de façon qu'un mouvement de rotation des supports autour de l'axe XX' permette un mouvement de translation verticale du toit (2).

## Description

La présente invention concerne le domaine des véhicules automobiles et plus particulièrement les systèmes de couverture rigides et pliables desdits véhicules.

Aujourd'hui les utilisateurs de véhicules automobiles souhaitent de plus en plus pouvoir utiliser leur véhicule en toutes circonstances: voyages, déménagement, utilitaire pour un artisan, plaisir... Ils cherchent donc des véhicules qui soient le plus modulaire possible.

On connaît des véhicules découvrables dont le toit rigide est pliable dans le coffre grâce à des barres articulées longitudinalement et de type pantographe et qui permettent de faire basculer le toit de la position couverte à l'avant vers le coffre en position rangée.

On connaît également des systèmes de véhicules découvrables où le toit et ses cotés rentrent dans les cotés du véhicule, ce qui permet de baisser le toit, mais pour laisser la place du conducteur accessible quand le toit est baissé, on est obligé de plier le toit sur lui-même ou de faire reculer les cotés: dans ce cas le véhicule présente un porte-à-faux important; ceci s'applique aussi pour dégager des places arrières.

Tous ces systèmes présentent l'inconvénient d'être encombrants: ils prennent de la place dans le coffre quand ils sont escamotés, et il faut aussi prévoir de la place pour les moyens d'actionnement et tout ceci alourdit le véhicule. D'autre part, ils ne sont pas toujours faciles à faire fonctionner, ce qui peut nécessiter l'utilisation d'un moteur pour actionner l'ensemble.

D'autre part, tous ces systèmes limitent l'accès au coffre quand le toit est rangé et ils nécessitent un porte-à-faux arrière important pour intégrer les cotés du toit quand ceux-ci sont rangés sur les parties latérales du véhicule.

Par ailleurs, la plupart de ces systèmes sont surtout utilisés pour couvrir ou découvrir des cabriolets.

Quand il s'agit d'un utilitaire, comme un véhicule break, ces systèmes ne sont pas très pratiques car la partie haute qui s'escamote dans le coffre, doit être plus étroite que les cotés du coffre afin de pouvoir s'y glisser, ce qui limite la place à la hauteur des épaules.

La présente invention permet de répondre à l'attente de ces nouveaux utilisateurs en offrant un système de couverture de véhicule qui permet des dispositions aussi éloignées qu'un utilitaire et un cabriolet tout en remédiant à tous ces inconvénients et en restant simple.

Le système de couverture pliable de véhicule automobile selon la présente invention, est composé de deux parties coulissantes l'une sur l'autre, l'une des parties étant constituée par un toit rigide et l'autre partie étant constituée de supports latéraux, caractérisé en ce que lesdits supports sont montés mobiles en rotation sur les parois latérales du véhicule selon un axe longitudinal au véhicule et en ce que le système de pliage est composé de rails de guidage montés sur l'une ou l'autre des parties de la couverture et coopérant avec des chariots ou galets fixés sur l'autre ou l'une des parties de façon qu'un mouvement de rotation des supports autour de l'axe longitudinal du véhicule permette un mouvement de translation verticale du toit.

Selon une variante de l'invention, le système de couverture pliable est composé d'un toit rigide mobile en translation entre deux positions haute et basse et de supports latéraux rigides articulés, ledit système est caractérisé en ce que les supports sont articulés au véhicule vers l'intérieur de celui-ci et en ce que le toit passe d'une position à l'autre en dépliant chaque support latéral et par le coulissement de galets placés sur chacun desdits supports latéraux dans des rails disposés sur la face inférieure du toit, lesdits rails étant sensiblement perpendiculaires à l'axe longitudinal du véhicule.

Cette configuration présente l'avantage d'être esthétique car le toit étant situé au-dessus des supports latéraux, lorsque celui-ci est plié, lesdits supports sont cachés par le toit. Dans cette configuration, l'étanchéité est simplement réalisée par un rebord du toit qui déborde des supports latéraux.

Ce système présente l'avantage de conserver un espace de rangement acceptable et de laisser l'accès au coffre possible: le battant arrière s'ouvre de façon classique vers le bas.

Selon une disposition particulière de l'invention, les rails sont orientés vers l'arrière du véhicule, la partie extérieure correspondant à la position haute étant placée en arrière de la partie intérieure correspondant à la position basse. Ainsi, quand on déplie les supports latéraux vers l'extérieur, le galet placé en haut de chacun des supports fait avancer le toit vers l'avant, ce qui permet de couvrir en totalité ou en partie l'espace où se trouve le conducteur quand le toit est déplié. Dans le cas où l'espace conducteur n'est pas entièrement couvert, on peut prévoir un panneau supplémentaire de type "Targa™" pour recouvrir l'espace restant.

Selon une disposition particulière de l'invention, le système de couverture pliable de véhicule automobile est caractérisé en ce que les galets sont disposés sur le haut des supports latéraux.

Selon une variante de l'invention, le système de couverture pliable de véhicule automobile est composé d'un toit rigide mobile en translation entre deux positions haute et basse et de supports rigides latéraux articulés, ledit système étant caractérisé en ce que les supports sont articulés vers l'intérieur du véhicule et en ce que le toit passe d'une position à l'autre en dépliant chaque support latéral placé dessus le toit et par le coulissement de galets placés sur chacun des cotés du toit dans des rails disposés dans lesdits supports latéraux et sensiblement verticaux.

Selon une disposition particulière de l'invention, le système de couverture pliable de véhicule automobile est caractérisé en ce que les rails sont orientés vers l'avant du véhicule, la partie haute correspondant à la position haute étant placée en avant de la partie basse correspondant à la position basse. Lorsque l'on fait coulisser le toit dans les rails des supports latéraux, celui-ci avance en s'élevant. Lorsque l'arrière des supports n'est pas rectiligne, les rails sont parallèles à la forme arrière desdits supports.

Selon une variante de l'invention, le système de couverture pliable de véhicule automobile est caractérisé en ce que les supports rigides sont des panneaux. L'ensemble comprend ainsi à la fois le toit et les cotés.

Selon une disposition particulière de l'invention, le système de couverture pliable de véhicule automobile est caractérisé en ce que les panneaux latéraux comportent au moins deux galets chacun, ce qui permet d'assurer la rigidité du toit et des deux panneaux en position déployée.

Selon une disposition particulière de l'invention, le système de couverture pliable de véhicule automobile est caractérisé en ce que les axes de rotation des panneaux sont parallèles.

Selon une disposition particulière de l'invention, le système de couverture pliable de véhicule automobile est caractérisé en ce que les axes de rotation des panneaux convergent vers l'arrière du véhicule. Dans le cas où les cotés extérieurs du véhicule sont effilés vers l'arrière, les panneaux latéraux convergent, ce qui présente l'avantage, lorsque l'on déplie le toit, d'améliorer la stabilité de l'ensemble en position déployée. Cette disposition dépend de la forme extérieure du véhicule.

Selon une variante de l'invention, le système de couverture pliable de véhicule automobile est caractérisé en ce que les panneaux latéraux sont biseautés vers l'arrière.

Selon une variante de l'invention, le système de couverture pliable de véhicule automobile est caractérisé en ce que les panneaux latéraux sont arrondis à l'arrière et que le coffre (7) est arrondi et comporte une vitre coulissante qui coopère avec l'arrière des panneaux latéraux, l'ensemble formant la même courbe. Ainsi, la vitre peut naturellement coulisser dans la partie haute du panneau, ce qui permet de fermer l'arrière du véhicule. Cette configuration est particulièrement intéressante car elle ne laisse ainsi aucune partie découverte quand le toit avance: en effet, dans ce cas, l'avancée du toit suit le coté du panneau et la vitre obture le troisième côté.

Selon une variante de l'invention, le système de couverture pliable de véhicule automobile est caractérisé en ce que les panneaux latéraux comprennent une ouverture. Cette ouverture peut comporter une vitre amovible. La taille de cette ouverture peut être suffisante pour laisser l'accès aux places arrières lorsque le toit est escamoté.

Selon une variante de l'invention, le système de couverture pliable de véhicule automobile est caractérisé en ce que le toit comporte une partie coulissante télescopique. Ainsi, on peut couvrir les parties du véhicule qui ne sont pas couvertes par le toit. On peut également prévoir de libérer les places arrières lorsque le toit est replié.

Selon une disposition particulière de l'invention, le système de couverture pliable de véhicule automobile est caractérisé en ce que la partie coulissante est placée à l'avant et s'attache au pare-brise du véhicule de façon connue. Cette configuration permet de couvrir l'espace du conducteur.

Selon une variante de l'invention, le système de couverture pliable de véhicule automobile est caractérisé en ce que ledit système est amovible. L'utilisateur peut ainsi remplacer le toit par des arceaux, un panneau horizontal, ou laisser la partie arrière nue, ou par tout autre élément modulaire comme par exemple des systèmes de fixation de planche à voile, de surf, etc...

Selon une disposition particulière de l'invention, le système de couverture pliable de véhicule automobile est caractérisé en ce que ledit système est fixé sur le véhicule par l'intermédiaire d'au moins quatre points de fixation.

Selon une disposition particulière de l'invention, le système de couverture pliable de véhicule automobile est caractérisé en ce que le toit présente une forme en creux correspondant aux supports latéraux. En position escamotée les côtés sont donc totalement intégrés au toit, ce qui améliore l'esthétique et l'aérodynamisme du véhicule.

Selon une variante de l'invention, le système de couverture pliable de véhicule automobile est caractérisé en ce que les supports latéraux sont des barres sur lesquelles on peut venir fixer des panneaux. Ce qui signifie que les panneaux latéraux sont démontables: le véhicule peut ainsi être utilisé en véhicule de plage tout en restant couvert.

L'ensemble des éléments composant le système de couverture pliable: toit et supports sont en matériau composite, ce qui allège le système.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels:
- la figure 1 est une vue en perspective d'un véhicule équipé d'une première variante de l'invention,
- la figure 2 est une vue en perspective du véhicule équipé d'une deuxième variante de l'invention,
- la figure 3 a est une vue en perspective du véhicule avec un premier moyen de fermeture de l'avant du toit,

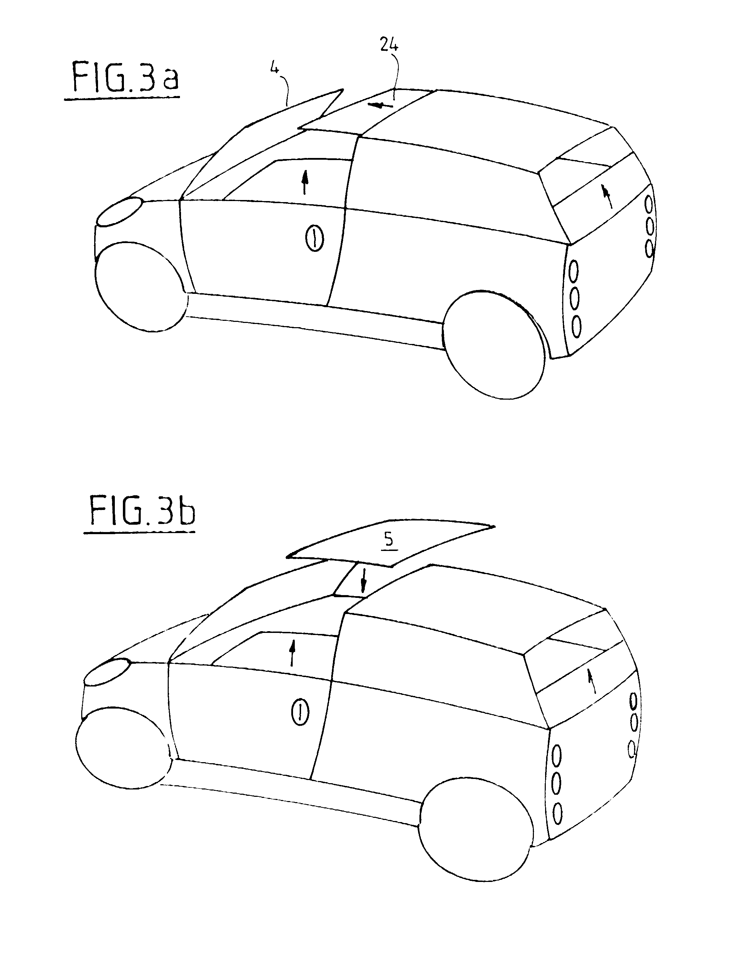

- la figure 3 b est une vue en perspective du véhicule avec un deuxième moyen de fermeture de l'avant du toit,

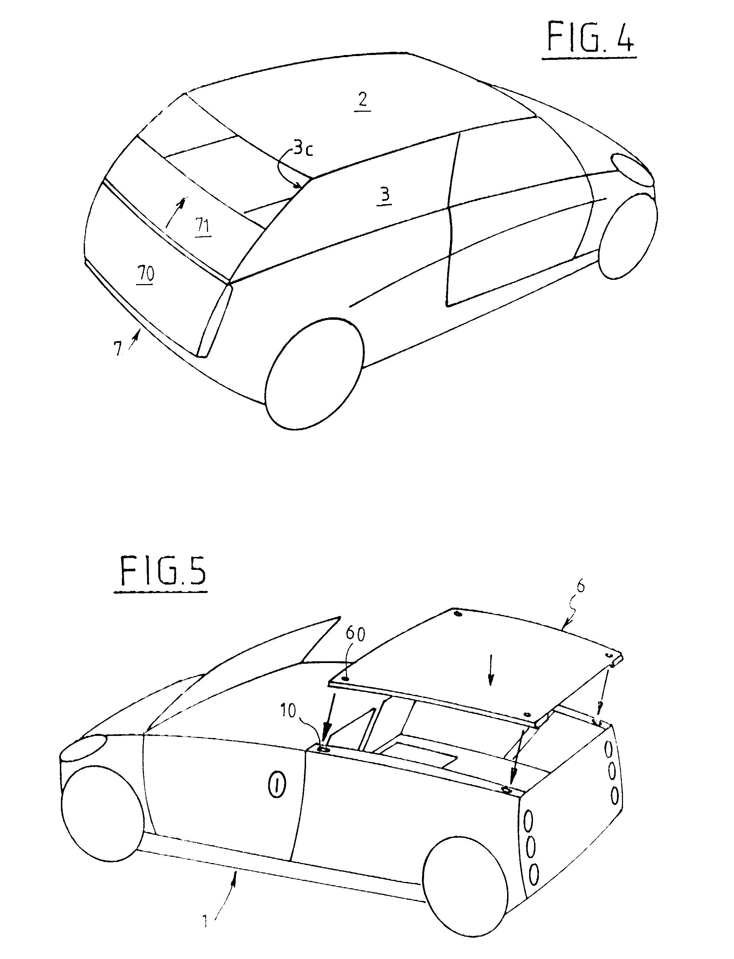

- la figure 4 est une vue en perspective du véhicule avec un arrondi arrière englobant le battant et la vitre arrière,
- la figure 5 est une vue en perspective du véhicule montrant la fixation du toit,

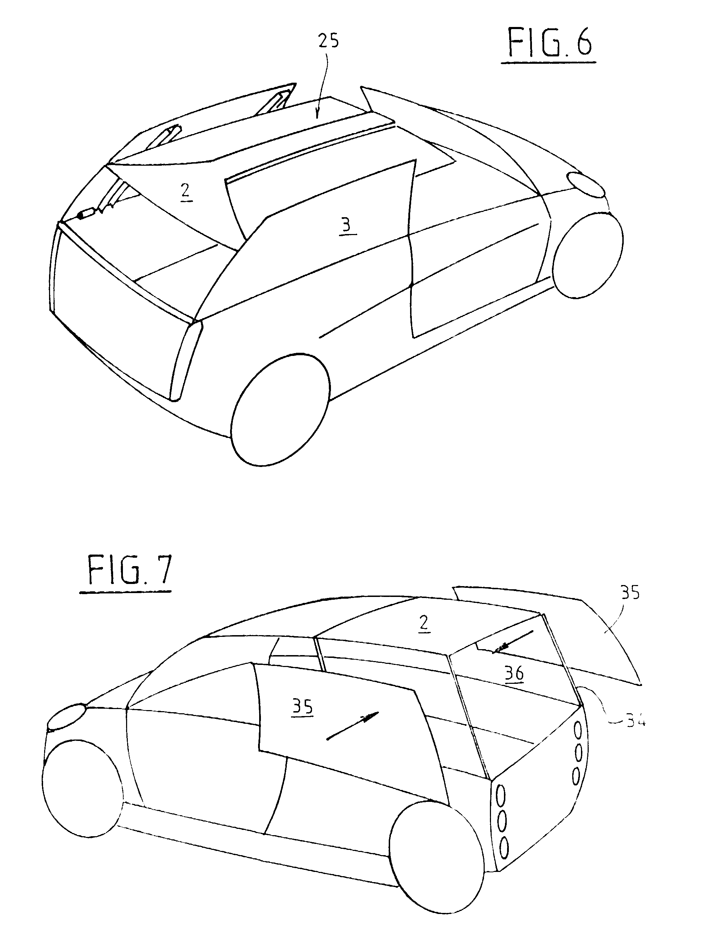

- la figure 6 est une vue en perspective du véhicule dont le toit présente des formes en creux pour les parties latérales,
- la figure 7 est une vue en perspective du véhicule montrant le montage des panneaux latéraux.

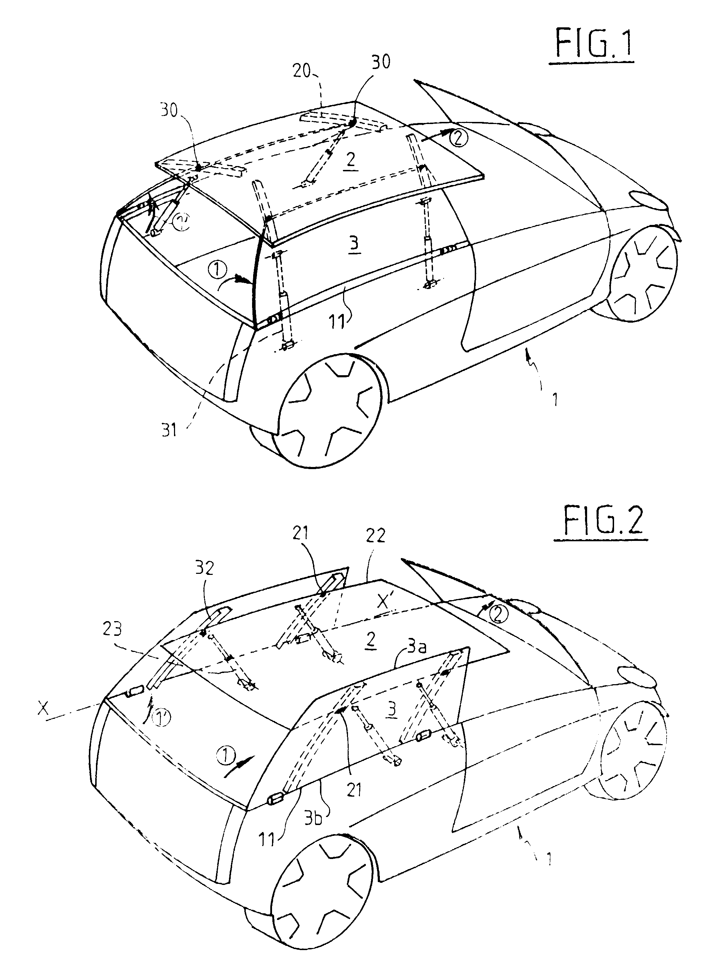

Le véhicule 1 représenté à la figure 1 comporte un toit 2 et deux parties latérales ou supports 3 articulés en rotation sur les parois latérales 11 du véhicule. Le toit 2 est mobile entre deux positions haute et basse, ou ouverte et fermée.

Chaque support 3 comporte un galet ou un chariot 30 qui glisse dans un rail 20 disposé sous le toit 2.

Comme on peut le voir sur la figure 1 les rails 20 sont orientés obliquement vers l'avant du véhicule en direction de l'axe longitudinal de celui-ci; ainsi l'avancement des galets 30 dans les rails 20 entraîne un mouvement ② vers l'avant et, on peut ainsi couvrir les places avant du véhicule.

Le mouvement pour passer de la position basse à la position haute s'effectue de la façon suivante:
- en partant de la position fermée le toit 2 est disposé au-dessus des supports latéraux 3 qui sont cachés par ledit toit ;
- on déverrouille le système à partir d'une commande mécanique par câble ou magnétique ;
- le mouvement de dépliage est initié par l'utilisateur en ouvrant la porte arrière et en poussant les parties latérales 3 vers le haut, on déplie les parties latérales 3 suivant le mouvement ① ;
- le dépliage des supports latéraux 3 disposés en dessous du toit 2 entraîne celui-ci vers le haut ;
- l'orientation des rails 20 vers l'avant du véhicule entraîne le toit vers l'avant suivant le mouvement ②;
- le système de couverture est donc complètement ouvert avec les supports latéraux 3 verticaux et le toit 2 en position haute ;

La fermeture s'effectue suivant le même mouvement mais inversé.

Pour faciliter le dépliage, on peut ajouter des vérins 31 disposés entre le coté intérieur du véhicule et la partie haute des supports latéraux, mais on peut également prévoir l'automatisation de l'ouverture et de la fermeture par un moteur électrique. Si les vérins sont suffisamment puissants le déverrouillage du système entraîne le dépliage du toit, sans autre intervention de l'utilisateur.

Dans cette variante, on a l'avantage d'avoir toujours le toit au-dessus, ce qui est plus simple pour l'étanchéité du véhicule.

Selon la variante représentée à la figure 2, les parties latérales 3 sont disposées au-dessus du toit 2 en position fermée, elles sont articulées par leur côté 3b à la partie latérale 11 du véhicule. Chaque partie latérale 3 comporte deux rails 32 disposés sur la face intérieure et s'étendant depuis le coté 3b jusqu'au coté 3a de façon parallèle, soit de l'axe d'articulation XX' vers l'extrémité opposée à cet axe. Ces rails sont inclinés vers l'avant afin de permettre l'avancement du toit.

Le toit 2 dispose de quatre galets 21 situés sur les cotés 22 correspondant à la partie latérale du véhicule 1.

Dans cette variante, l'ouverture se décompose de la façon suivante:
- en partant de la position fermée le toit 2 est disposé dessous les parties latérales 3 qu'il cache,
- on ouvre les parties latérales 3 en les faisant pivoter autour de l'axe XX' suivant le mouvement ①,
- on monte le toit 2 en position haute grâce à des vérins 23 disposés sous le toit à l'avant des galets 21 et dans la partie avant du coffre. Ici encore, on peut prévoir une motorisation de ce mouvement par un moteur électrique,
- l'orientation vers l'avant des rails 32 fait avancer le toit 2 suivant le mouvement ②, ce qui permet de couvrir la partie où est placé le conducteur,
- en position ouverte le toit 2 est en position haute et les parties latérales 3 sont verticales.

La fermeture s'effectue suivant le même mouvement mais inversé.

Dans le cas où les rails 20 ou 32 ne sont pas suffisamment orientés vers l'avant (variante de la figure 1 ou de la figure 2) pour atteindre le haut du pare-brise 4, on peut installer un toit télescopique 24 comme cela apparaît à la figure 3a, ou une partie amovible 5 de type "Targa™" comme à la figure 3b.

Malgré l'avance du toit vers l'avant du véhicule qui découvre l'arrière, celui-ci peut être fermé. L'arrière du véhicule est fermé par une porte 70 articulée en partie basse selon un axe perpendiculaire à l'axe du véhicule comme le montre la figure 4. Si cette partie basse présente une courbure en continuité avec celle de l'arrière 3c des parties latérales, il est possible de prévoir une vitre 71 coulissante dans la partie basse 70 afin de fermer de façon étanche l'arrière du véhicule.

L'ensemble 6 composé du toit 2 et des deux parties latérales 3, peut être démontable comme on le voit à la figure 5. Il suffit de prévoir des trous 10 de fixation sur le véhicule 1 aux quatre coins arrière. Ces trous 10 coopèrent de façon connue avec des moyens de fixation 60 disposés sur l'ensemble 6.

Afin d'améliorer l'aérodynamisme du véhicule dans le cas de la deuxième variante où le toit est en dessous des parties latérales 3 en position fermée, on peut prévoir des formes en creux 25 dans la partie supérieure du toit 2 comme on le voit à la figure 6. Ces formes en creux ont la forme des parties latérales 3. Ainsi, quand on plie le toit, les parties latérales 3 viennent se placer dans ces formes en creux 25. Quand le toit est fermé, il ne présente pas d'aspérités dommageables à l'aérodynamisme.

La figure 7 montre un mode de réalisation particulier de la première variante où les parties latérales sont des tiges 34 qui coulissent dans le toit 2. Le véhicule 1 est donc ouvert sur les cotés et si l'on souhaite les fermer, il suffit de venir accrocher des panneaux latéraux 35 dans ces ouvertures.

Ces panneaux latéraux 35 peuvent être indifféremment transparents ou opaques suivant le souhait de l'utilisateur.

## Revendications

1. Système de couverture pliable de véhicule automobile composé de deux parties coulissantes l'une sur l'autre, l'une des parties étant constituée par un toit rigide (2) et l'autre partie étant constituée de supports latéraux (3), caractérisé en ce que lesdits supports (3) sont montés mobiles en rotation sur les parois latérales (11) du véhicule selon un axe XX' longitudinal au véhicule et en ce que le système de pliage est composé de rails de guidage (20, 32) montés sur l'une ou l'autre des parties de la couverture et coopérant avec des chariots ou galets (30, 21) fixés sur l'autre ou l'une des parties de façon qu'un mouvement de rotation des supports autour de l'axe XX' permette un mouvement de translation verticale du toit (2).

2. Système de couverture pliable de véhicule automobile selon la revendication 1, caractérisé en ce que les supports (3) sont articulés au véhicule (1) et vers l'intérieur de celui-ci et en ce que le toit (2) passe d'une position à l'autre en dépliant chaque support latéral (3) et par le coulissement des galets (30) placés sur chacun desdits supports latéraux (3) dans des rails (20) disposés sur la face inférieure du toit, lesdits rails (20) étant sensiblement perpendiculaires à l'axe longitudinal du véhicule.

3. Système de couverture pliable de véhicule automobile selon la revendication 2, caractérisé en ce que les rails (20) sont orientés vers l'arrière du véhicule, la partie extérieure correspondant à la position haute étant placée en arrière de la partie intérieure correspondant à la position basse.

4. Système de couverture pliable de véhicule automobile selon une des revendications précédentes, caractérisé en ce que les galets (30) sont disposés sur le haut des supports latéraux (3).

5. Système de couverture pliable de véhicule automobile selon la revendication 1, caractérisé en ce que les supports (3) sont articulés au véhicule (1) et vers l'intérieur de celui-ci et en ce que le toit (2) passe d'une position à l'autre en dépliant chaque support latéral (3) placé au-dessus du toit (2) et par le coulissement des galets (21) placés sur chacun des cotés du toit (2) dans des rails (32) disposés dans lesdits supports latéraux (3) et sensiblement verticaux.

6. Système de couverture pliable de véhicule automobile selon la revendication 5, caractérisé en ce que les rails (32) sont orientés vers l'avant du véhicule (1), la partie haute correspondant à la position haute étant placée en avant de la partie basse correspondant à la position basse.

7. Système de couverture pliable de véhicule automobile selon une des revendications précédentes, caractérisé en ce que les supports rigides (3) sont des panneaux.

8. Système de couverture pliable de véhicule automobile selon une des revendications 1 à 4 et la revendication 7, caractérisé en ce que les panneaux latéraux (3) comportent au moins deux galets (30) chacun.

9. Système de couverture pliable de véhicule automobile selon la revendication 7 ou 8, caractérisé en ce que les axes de rotation des panneaux sont parallèles.

10. Système de couverture pliable de véhicule automobile selon la revendication 7 ou 8, caractérisé en ce que les axes de rotation des panneaux convergent vers l'arrière du véhicule.

11. Système de couverture pliable de véhicule automobile selon l'une quelconque des revendications 7 à 10, caractérisé en ce que les panneaux latéraux (3) sont biseautés vers l'arrière.

12. Système de couverture pliable de véhicule automobile selon l'une quelconque des revendications 7 à 10, caractérisé en ce que les panneaux latéraux (3) sont arrondis à l'arrière, que la porte (70) est arrondie et comporte une vitre (71) coulissante qui coopère avec l'arrière des panneaux latéraux (3), l'ensemble formant une même courbe.

13. Système de couverture pliable de véhicule automobile selon l'une quelconque des revendications précédentes, caractérisé en ce que les panneaux latéraux (3) comprennent une ouverture.

14. Système de couverture pliable de véhicule automobile selon l'une quelconque des revendications précédentes, caractérisé en ce que le toit (2) comporte une partie coulissante télescopique (24).

15. Système de couverture pliable de véhicule automobile selon la revendication 14, caractérisé en ce que la partie coulissante (24) est placée à l'avant et s'attache au pare-brise (4) du véhicule.

16. Système de couverture pliable de véhicule automobile selon l'une quelconque des revendications précédentes, caractérisé en ce que ledit système (6) est amovible.

17. Système de couverture pliable de véhicule automobile selon la revendication 16, caractérisé en ce que ledit système (6) est fixé sur le véhicule par l'intermédiaire d'au moins quatre points de fixation (10, 60).

18. Système de couverture pliable de véhicule automobile selon l'une des revendications 5 à 17, caractérisé en ce que le toit (2) présente une forme en creux (25) correspondant aux supports latéraux (3).

19. Système de couverture pliable de véhicule automobile selon l'une quelconque des revendications 1 à 6 ou 14 à 17, caractérisé en ce que les supports latéraux (3) sont des barres (34) sur lesquelles on peut venir fixer des panneaux (35)de façon amovible.

20. Système de couverture pliable de véhicule automobile selon l'une quelconque des revendications précédentes, caractérisé en ce que les éléments qui le composent sont en matériau composite.
